# EUROPEAN PATENT APPLICATION

(11) **EP 1 032 073 A2**
(43) Date of publication of application: **30.08.2000**
(21) Application number: 00103981.7
(22) Date of filing: 25.02.2000
(51) Int. Cl.: H01Q 3/24, H01Q 3/26, H01Q 1/32, H04B 7/08

(54) **Vehicle-mounted VHF diversity system**

(30) Priority: 26.02.1999 JP 4952399; 17.03.1999 JP 7201099
(71) Applicant: Nippon Sheet Glass Co., Ltd., Osaka-shi, Osaka 541-0045 (JP)
(72) Inventor: Kakizawa, Hitoshi, c/o Nippon Sheet Glass Co., Ltd, Osaka-shi, Osaka 541-0045 (JP); Oshima, Hideaki, c/o Nippon Sheet Glass Co., Ltd, Osaka-shi, Osaka 541-0045 (JP)
(74) Representative: Prechtel, Jörg, Dipl.-Phys. Dr.

(57) **Abstract**

A vehicle-mounted VHF diversity system includes two VHF antennas (2A, 2B) and a phased-array antenna signal generating section (4) for generating from signals (S3, S4) received by the two VHF antennas at least one phased-array antenna signal (S6, S8) having different characteristics of directivity from the antenna signals. A selector (5) selects, from among the signals and the phased-array antenna signal, one signal for feeding to a VHF tuner (9). A selection controller (8) controls the selector to select the signal having the highest level. With this arrangement, the vehicle-mounted VHF diversity system can produce with only two antennas the result as achieved by three or more antennas. With only two antennas being necessary, a small area is required for disposition or arrangement of the antennas, thereby increasing the freedom of antenna designing and enabling the selection of antenna disposition areas which are free from antenna interferences.

## Description

This invention relates generally to a vehicle-mounted VHF diversity system and, more particularly, to a vehicle-mounted TV diversity system which provides for good reception of VHF waves with a small number of antennas.

In recent years, watching TV in cars has been spreading. Nowadays, vehicle-mounted TV diversity systems for receiving TV pictures have been marketed.

TV waves received in different places while a car is moving often form a complex standing wave pattern consisting of a sum of numerous TV waves having different phases and amplitudes. To avoid flutter and ghosting when receiving TV waves of this kind and selectively receive only direct waves having a high reception level, a TV diversity system is used.

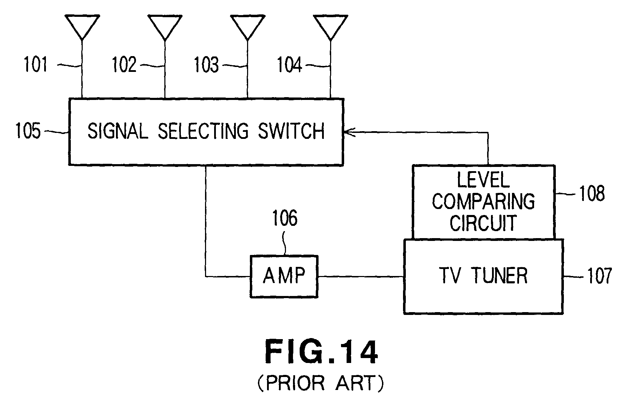

A typical example of conventional vehicle-mounted TV diversity systems is illustrated in FIG. 14 hereof. As shown in this figure, at each of the left and right ends of a rear window of a vehicle are disposed two mutually perpendicular antennas; four antennas in total (antennas 101 to 104).

Four TV wave signals received by the antennas 101 through 104 are sequentially selected by a received signal switching switch 105. The received signals are amplified by an amplifying circuit 106 and then supplied to a TV tuner 107.

A level-comparing circuit 108 compares (e.g., every 1/60 sec) the levels of the four received signals sequentially selected by the received signal switching switch 105, and when it has selected from among these four received signals the received signal having the highest reception level, it sends an antenna switching signal corresponding to the received signal having the highest reception level to the received signal switching switch 105 to specify the respective antenna.

Being thus arranged, the conventional TV diversity system provides for stable in-vehicle TV reception without developing the undesired flutter and ghosting.

However, the conventional TV diversity system has a problem in that because four TV antennas are necessary, a large antenna installation space is required in the relatively confined space of a vehicle. Another problem is that because many antennas, e.g., AM and FM antennas, are provided along with TV antennas in the confined vehicle space, interference is liable to occur between those antennas, especially between the TV antennas themselves, thereby rendering the antenna designing a difficult task.

In addition, the conventional vehicle-mounted TV diversity system has the disadvantage that it allows connection to only one TV tuner. In many recreational vehicles (RVs) currently marketed, an additional TV set is installed for back seat passengers, thereby requiring the TV diversity system to be redesigned to allow connection to plural TV tuners.

The present invention has been attained with a view to overcome the foregoing problems and disadvantage. It is accordingly a general object of the present invention to provide a vehicle-mounted VHF diversity system which can produce, with a reduced number of antennas but without deterioration in the reception sensitivity due to the interference between the antennas, many antenna synthesized outputs and select suitable ones from among those outputs for achieving good reception.

A more specific object of the present invention is to provide a vehicle-mounted VHF diversity system which can generate three or four received signals using two VHF antennas and from these received signals select a best received signal for reception.

It is another object of the present invention to provide a vehicle-mounted VHF diversity system which allows for connection to plural VHF tuners.

According to the present invention, there is provided a vehicle-mounted VHF diversity system comprising: two VHF antennas disposed on a vehicle in spaced relation to each other; phased-array antenna signal generating means for generating from signals received by the two VHF antennas at least one phased-array antenna signal having different characteristics of directivity from the signals received by the two VHF antennas; selecting means for selecting from among the signals received by the two VHF antennas and the phased-array antenna signal generated by the phased-array antenna signal generating means one signal for feeding to a tuner; and selection control means for controlling the selecting means to select the signal having the highest level.

By virtue of the phased-array antenna signal generating means, the vehicle-mounted VHF diversity system of the present invention can produce with only two antennas the result as achieved by three or more antennas. With only two antennas being necessary, a small area is required for disposition or arrangement of the antennas, thereby increasing the freedom of antenna disposition and enabling the selection of antenna disposition areas which are free from antenna interferences.

Preferably, the phased-array antenna signal generating means is a phase-synthesizing means including at least one phase shifter for shifting in a predetermined phase shift amount the phase of the signal received by either of the two VHF antennas, and a synthesizer for synthesizing a signal outputted from the phase shifter with the signal received by the other one of the VHF antennas.

By thus phase-shifting the output of one of the VHF antennas by using the phase shifter and synthesizing the phase-synthesized signal with the output of the other one of the VHF antennas, a virtual antenna with altered directional characteristics can be provided. Since the synthesized directional characteristics are determined by the amount of shift of the phase shifter, it becomes possible to obtain plural signals of varying directional characteristics by providing a plurality of phase shifters of different shift amounts. In other words, by increasing the number of phase shifters, it becomes possible to increase the number of desired virtual antennas.

For example, by phase-synthesizing the signals from two VHF antennas, more than three different synthesized signals can be produced. This means that the same results as achieved by the conventional TV diversity system employing four antennas can be produced by using only two antennas.

By virtue of the synthesized signals, the VHF diversity system requires fewer antennas, whereby a space required for disposition of antennas may be small and interferences between antennas can be avoided.

The phase-synthesizing means may be constructed to phase-synthesize at a fixed phase the signals received by the two VHF antennas. The vehicle-mounted VHF diversity system can produce three or more received signals from a fixed phase-synthesis signal and two received signals from two VHF antennas. Also, it can select from three or more received signals the received signal having the highest reception level.

The phase-synthesizing means of the invention preferably phase-synthesizes the received signals at the same phase or the opposite phase or both.

If the phase-synthesizing means generates a single phase-synthesized signal by phase-synthesizing received signals from two VHF antennas at either the same phase or the opposite phase, it can provide VHF diversity equivalent to that normally obtained with three VHF antennas.

If the phase-synthesizing means generates two phase-synthesized signals by phase-synthesizing received signals from two VHF antennas at the same phase and at the opposite phase, it can provide VHF diversity equivalent to that normally obtained with four VHF antennas.

Also, preferably, the two VHF antennas of the invention receive two received signals having directional characteristics in opposing directions of the vehicle and the phase-synthesizing means generates at least one phase-synthesized signal having a directional characteristic orthogonal to the directional characteristics of the two received signals.

In this case, since there are provided two VHF antennas having directional characteristics in opposing directions of the vehicle and the phase-synthesizing means generating a phase-synthesized signal having a directional characteristics orthogonal to the directional characteristics of the two received signals, VHF waves can be received with high sensitivity irrespective of the position and the orientation of the vehicle.

It is preferred that the VHF diversity system includes amplifying circuits disposed immediately following the respective VHF antennas for amplifying the signals received by the VHF antennas.

Desirably, the VHF diversity system includes an additional signal selecting means for allowing connection to an additional tuner.

The above and other object, features and advantages of the present invention will become manifest to those versed in the art upon making reference to the following description and accompanying sheets of drawings in which preferred structural embodiments incorporating the principle of the invention are shown by way of illustrative examples.
FIG. 1 is a block diagram illustrating a vehicle-mounted TV diversity system according to the present invention;
FIG. 2 is a block diagram similar to FIG. 1 but illustrating an alteration of the vehicle-mounted TV diversity system;
FIG. 3 is a block diagram similar to FIG. 2 but illustrating a further alteration of the vehicle-mounted TV diversity system;
FIG. 4A and 4B are charts of directional characteristics of right and left side window antennas obtained by simulation;
FIGS. 5A to 5C illustrates directional characteristics of simulated analysis models experimented using the TV diversity system;
FIG. 6 illustrates sensitivity characteristics of phase-synthesized signal and the signal as received by the antennas;
FIG. 7 is a block diagram similar to FIG. 1 but illustrating another alteration of the vehicle-mounted TV diversity system;
FIGS. 8A through 8E are charts of directional characteristic of sensitivity with respect to H-polarized waves obtained by simulation;
FIGS. 9A through 9E are charts of directional characteristic of sensitivity with respect to V-polarized waves obtained by simulation;
FIGS. 10A through 10E are charts of directional characteristic of sensitivity obtained in a minivan (measurement frequency 103Mhz);
FIGS. 11A through 11E are charts of directional characteristic of sensitivity obtained in a minivan (measurement frequency 199Mhz);
FIGS. 12A through 12E are charts of directional characteristic of sensitivity obtained in a station wagon (also called estate wagon) vehicle (measurement frequency 102Mhz);
FIGS. 13A through 13E are charts of directional characteristic of sensitivity obtained in a station wagon vehicle (measurement frequency 200Mhz); and
FIG. 14 is a block diagram illustrating a conventional vehicle-mounted TV diversity system.

The following description is merely exemplary in nature and is in no way intended to limit the invention or its application or use.

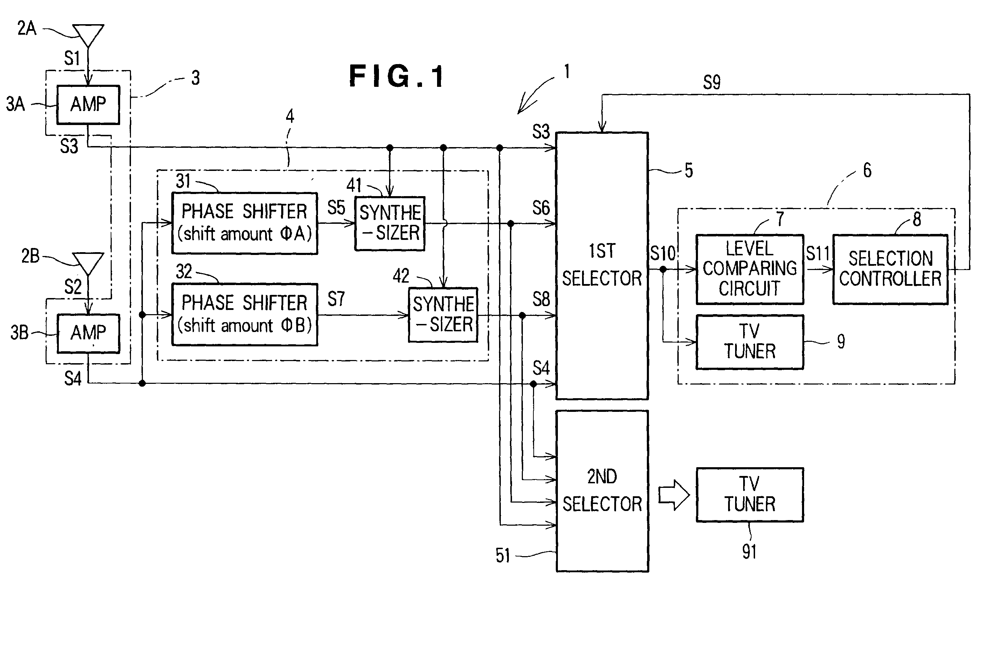

Referring to FIG. 1, there is shown a vehicle-mounted TV diversity system as a typical example of the vehicle-mounted VHF diversity system according to the present invention. The vehicle-mounted TV diversity system 1 generally comprises two TV antennas 2A and 2B, an amplifying means or amplifier 3, a virtual or phased-array antenna signal generating means or generator 4, a selecting means or selector 5, and a receiving means or unit 6.

The first and second TV antennas 2A, 2B are attached to opposite side edges of a rear window glass, or side window glass, of a vehicle (not shown).

Signals S1 and S2 received by the antennas 2A and 2B are amplified by their respective first and second RF amplifying circuits 3A and 3B of the amplifier 3. The amplifying circuits 3A, 3B have an impedance matching function; they suppress loss of the received signals S1, S2 supplied from the TV antennas 2A, 2B and amplify them at a required amplification factor.

The signal S1 amplified by the first RF amplifying circuit 3A is fed as a low output impedance received signal S3 to a first switch (not shown) of the selector 5 as well as to first and second synthesizers 41, 42 of the phased-array antenna signal generating means 4. The signal S2 amplified by the second RF amplifying circuit 3B is inputted as a low output impedance received signal S4 into the first and second phase shifters 31, 32 of the phased-array antenna signal generating means 4 as well as into a fourth switch (not shown) of the selector 5.

The first and second phase shifters 31, 32 of the phased-array antenna signal generating means 4 shift the phases of the received signals in different amounts (φA, φB); for example, the first phase shifter 31 shifts the received signal phase by 90° while the second phase shifter 32 shifts the received signal phase by 180°.

The phase-shifted signal S5 from the first phase shifter 31 is phase-synthesized at the first phase shifter 41 with the signal S3 amplified by the first amplifying circuit 3A to provide a phase-synthesized signal S6 to be inputted into a second switch (not shown) of the selector 5. The resulted synthesized signal S6 has a directional characteristic different from those of the antennas 2A, 2B. This is equivalent to the provision of an additional antenna. The phase-shifted signal S7 from the second phase shifter 32 is phase-synthesized at the second phase sifter 42 with the signal S3 received by the first antenna 2A and amplified by the amplifying circuit 3A to provide a synthesized signal S8 which is inputted into a third switch (not shown) of the selector 5. The resulted synthesized signal S8 has a directional characteristic different from those of the antennas 2A, 2B. These directional characteristics are determined by a difference in phase between the signals synthesized by the synthesizers. That is, the directional characteristics are determined by the amounts of phase shift of the phase shifters. Since the amount of phase shift by the first phase shifter 31 differs from that by the second phase shifter 32, two different signals S6 and S8 are provided, thereby producing the same results as produced by two additional, phased-array antennas having different directional characteristics.

Thus, the phased-array antenna signal generating means 4 including the phase shifters 31, 32 and the synthesizers 41, 42 in pairs forms a phase-synthesizing means or synthesizer and operates to generate from the signals S1, S2 received by the TV antennas 2A, 2B two phased-array antenna signals S6, S8 having directional characteristics different from those of the received signals S1, S2.

The selector 5 is fed with four different signals, namely, the signal S3 maintaining the original characteristics as received by the first TV antenna 2A, the signal S6 produced by synthesizing the signal S5 received by the second TV antenna 2B and phase-shifted by the first phase shifter 31, with the signal S3 maintaining the original characteristics as received by the first TV antenna 2A, the signal S8 produced by synthesizing the signal S7 received by the second TV antenna 2B and phase-shifted by the second phase shifter 32, with the signal S3, and the signal S4 maintaining the original characteristics as received by the second TV antenna 2B. Consequently, four different signals S3, S6, S8 and S4 are produced from the two antennas.

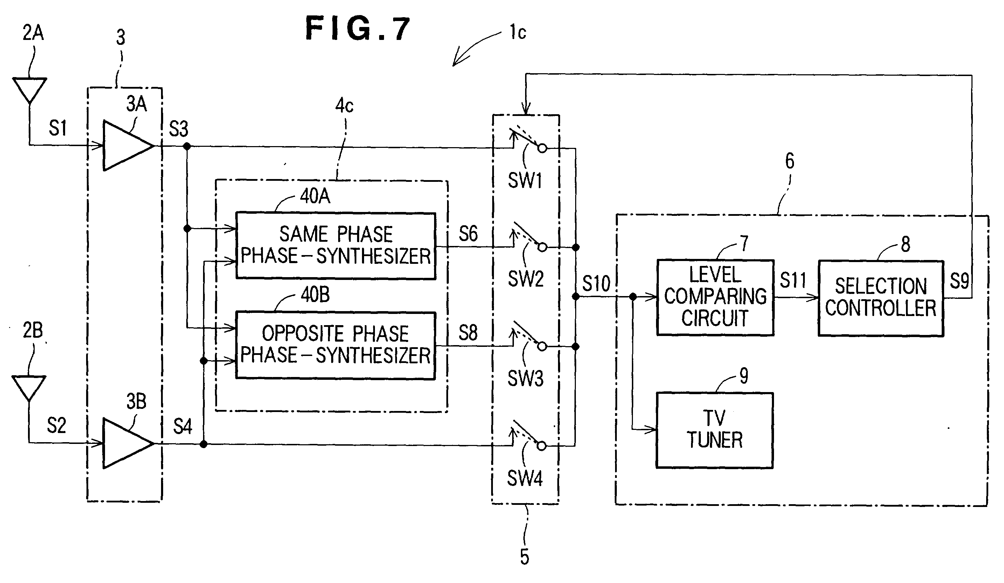

The selector 5 is made up of four electronic switches, and on the basis of a selection control signal S9 supplied from the receiving means 6 selects one signal from among the four signals S3, S6, S8 and S4 and supplies this selected signal S9 to the receiving means 6 as a received signal S10. The structure and operation of the selector 5 will be described in greater detail with reference to an embodiment shown in FIG. 7.

The receiving means 6 is made up of a level-comparing means or circuit 7, a selection control means or controller 8 and a TV tuner 9.

The level-comparing circuit 7 is made up of rewritable memory such as RAM and level comparators and so on; it stores in memory at a cycle of, e.g., 1/60 sec, received signals S10 consisting of the received signal S3, the phased-array antenna signal S6, the phased-array antenna signal S8 and the received signal S4 sequentially selected by the selector 5, executes a comparison of the levels of the these signals stored in memory, and supplies to the selection controller 8 a comparison signal S11 corresponding to the signal among the received signal S3, the phased-array antenna signal S6, the phased-array antenna signal S8 and the received signal S4 which has the highest level.

The selection controller 8 provides the selector 5 with the selection control signal S9 on the basis of the comparison signal H11 supplied from the level-comparing circuit 7, and thereby executes control specifying the switch (not shown) among the four switches which selects whichever of the received signal S3, the phased-array antenna signal S6, the phased-array antenna signal S8 and the received signal S4 has the highest level.

The TV tuner 9 together with video/audio circuits, display and so on forms a TV set. By the TV tuner 9 the TV set turns the highest-level received signal S10 (either the received signal S3, the phased-array antenna signal S6, the phased-array antenna signal S8 or the received signal S4) selected by whichever of the four switches (not shown) has been specified by the selector 5. The TV set also carries out amplification and so on of a video signal and an audio signal, displays a video picture on a screen, and outputs sound from an electro-acoustic transducer such as a loudspeaker.

The TV diversity system 1 according to the present embodiment further includes a second selecting means or selector 51 to which the signals S3, S6, S8, S4 are also distributed. A second TV tuner 91 indicated by the phantom line may be connected to the second selector 51. Although not shown, a second level-comparing circuit and a second selector controller may be provided in conjunction with the second selector 51 to enable the latter to select a signal of highest level. The distribution of the signals S3, S6, S8, S4 to both the first and second selectors 5 and 51 is enabled because the signals S1, S2 received by the TV antennas 2a, 2B are amplified by the amplifying circuits 3A, 3B and impedance matching is established. Thus, the selectors 5, 51 may not be limited to two as in the present embodiment; three or more selectors may also be provided.

As explained above, with only two antennas 2A, 2B, the TV diversity system 1 can produce four different reception signals S3, S6, S8, S4. As a result, a small area is required for antenna disposition, thereby increasing the freedom of antenna disposition and enabling the selection of antenna disposition areas which are free from antenna interferences. This further leads to the advantage that antenna designing is facilitated.

Since fewer antennas are required in the TV diversity system 1, amplifying circuits 3A, 3B can be disposed immediately following the antennas 2A, 2B without much increasing the cost of production of the system. By virtue of the amplifying circuits 3A, 3B disposed immediately following the antennas 2A, 2B, stable distribution of received signals is enabled. As a result, it becomes possible to dispose two selectors 5, 51 for allowing connection to two TV tuners 9, 91, one for front seat passengers and the other for back seat passengers.

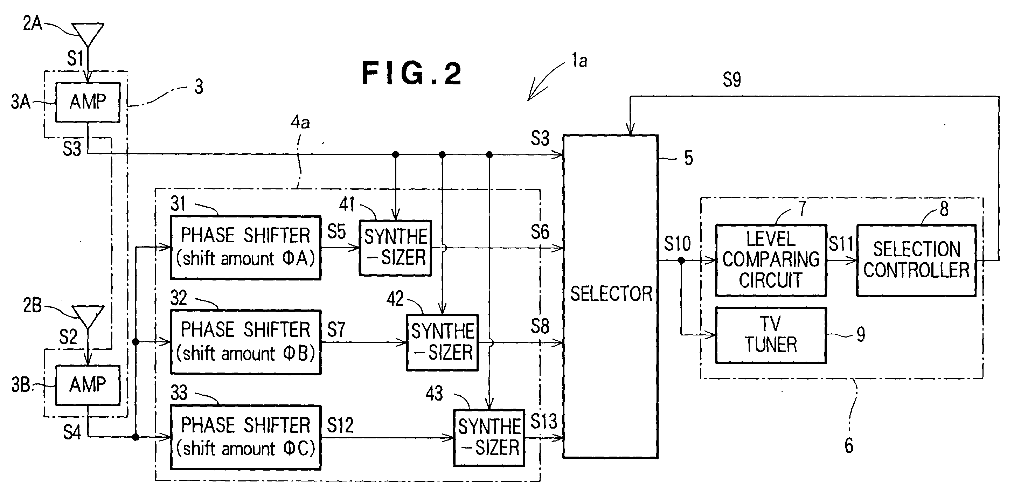

Reference is made next to FIG. 2 diagrammatically illustrating a first alteration of the TV diversity system 1 according to the present invention. Herein, like reference numerals will be used for corresponding parts.

As shown in FIG. 2, the altered TV diversity system 1a comprises a phased-array antenna signal generating means or generator 4a including three phase shifters 31, 32, 33 and three synthesizers 41, 42, 43, through which a signal S2 received by a second TV antenna 2B is turned into three phased-array antenna signals S6, S8 and S13.

In the TV diversity system 1a, the signal S2 received by the second TV antenna 2B is amplified by an amplifying circuit 3B and then fed to each of first, second and third phase shifters 31, 32, 33. The signal S4 fed to the first phase shifter 31 is phase-shifted by the shift amount of φA. Similarly, the signal S4 fed to the second phase shifter 32 is phase-shifted by the shift amount of φB while the signal S4 fed to the third phase shifter 33 is phase-shifted by the shift amount of φC. The phase-shifted signals S5, S7 and S12 of the first, second and third phase shifters 31, 32, 33 are phase-synthesized with a signal S3 received by the first TV antenna 2A and amplified by the amplifying circuit 3A, as at 41, 42, 43, and outputted as synthesized signals S6, S8, S13 into switches (not shown) of a selecting means or selector 5. The signal S3 maintaining the original directional characteristic as received by the first TV antenna 2A is also inputted into a switch (not shown) the selector 5. In cooperation with a level-comparing circuit 7 and a selector controller 8, the selector 5 selects, from among the signals S3, S6, S8, S13 having directional characteristics different from each other, one having a highest level of the frequency of a channel set for reception.

Although only one selector 5 is shown in FIG. 2, two or more signal selecting switches may be provided.

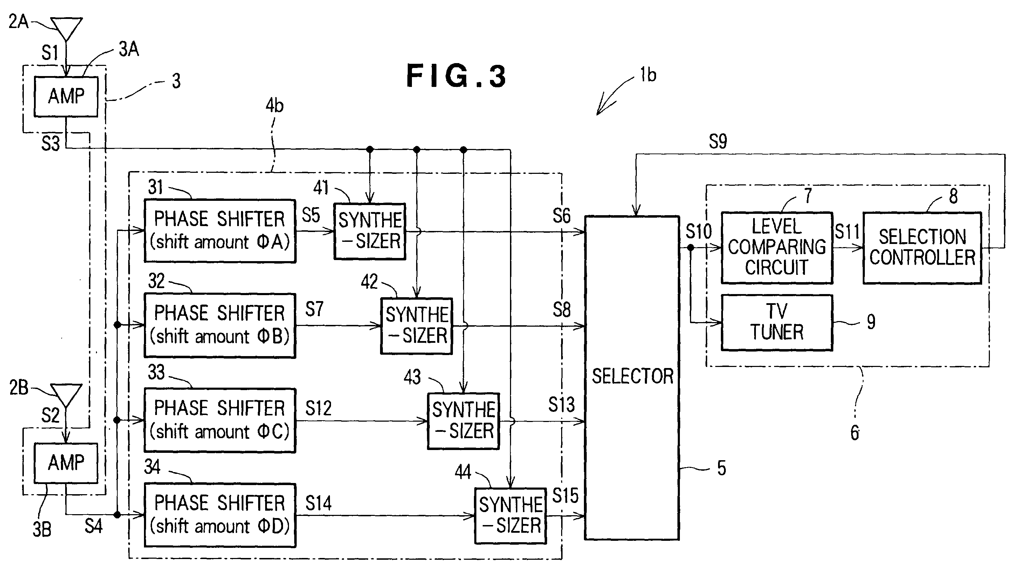

Discussion will be made next as to a second alteration of the vehicle-mounted TV diversity system according to the present invention with reference to FIG. 3. Like reference numerals will be used for corresponding parts.

As shown in FIG. 3, the altered TV diversity system 1b includes a phased-array antenna signal generating means 4b comprised of four phase shifters 31 to 34 and four synthesizers 41 to 44. In the system 1b, all the signals S1, S2 received by the actual antennas 2A, 2B are turned into phased-array antenna signals S6, S8, S13 and S15.

Signal S2 received by the second TV antenna 2B is amplified by an amplifying circuit 3B and then fed to each of the first, second, third and fourth phase shifters 31-34. In the first phase shifter 31, the fed signal S4 is phase-shifted by the shift amount of φA. In the second phase shifter 32, the fed signal S4 is phase-shifted by the shift amount of φB. Similarly, the signal S4 fed to the third phase shifter 33 is phase-shifted by the shift amount of φC while the signal S4 fed to the fourth phase shifter 34 is phase-shifted by the shift amount of φD. The phase-shifted signals S5, S7, S12 and S14 of the first, second, third and fourth phase shifters 31-34 are phase-synthesized at the synthesizers 41-44 with a signal S3 received by the first TV antenna 2A and amplified by the amplifying circuit 3A, and then inputted as synthesized signals S6, S8, S13 and S15 into a selecting means or selector 5. Thereafter, in cooperation with a level-comparing circuit 7 and a selector controller 8, the selector 5 selects, from among the synthesized signals S6, S8, S13 and S15, one having a highest level of the frequency of a channel set for reception.

Although the TV diversity system 1b of FIG. 3 has only one selector 5, two or more signal selecting switches may be provided as in the embodiment of FIG. 1.

In the embodiment and its alterations, two antennas are provided for producing four different signals for reception. However, an alternative arrangement is possible wherein three or more antennas are provides so that five or more different signals can be produced for reception.

### EXPERIMENT

For evaluating the characteristics of the TV diversity system according to the present invention, simulated analysis was conducted on the TV diversity system 1 of FIG. 1 as applied to a vehicle model of the minivan type, using, as antenna models, linear antennas having 850 mm long antenna elements disposed on side windows of the vehicle model (minivan) and fed vertically centrally from rear frame edges of the side windows.

The main parameters of the simulation model are shown below.

| | |
|---|---|
| vehicle length | 4,380 mm |
| vehicle width | 1,660 mm |
| vehicle height | 1,910 mm |
| antenna installation window (side window) sizes | 1,400 mm (L) x 500 mm (H) |
| analysis frequency | 110 MHz |
| antenna spacing (spacing of left and right side windows) | 1,530 mm (0.56 λ at 110 MHz) |

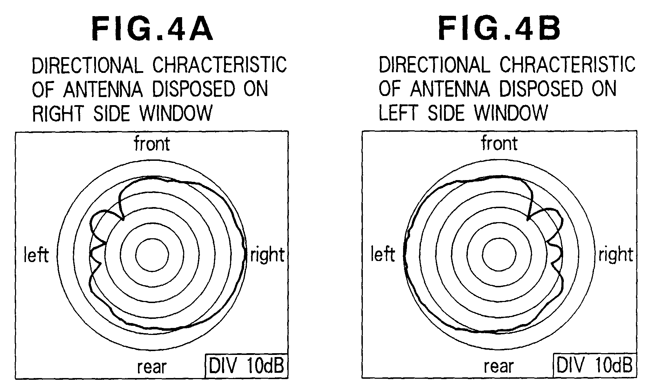

Reference is now made to FIGS. 4A and 4B showing the directional characteristics of the antennas on the right and left side windows. As can be appreciated from the directional characteristic of FIG. 4A, the reception sensitivity of the right side window antenna drops approximately 20 dB on the left side compared to the right side. Conversely, as can be seen from the directional characteristic of FIG. 4B, the reception sensitivity of the left side window antenna drops approximately 20 dB on the right side compared to the left side.

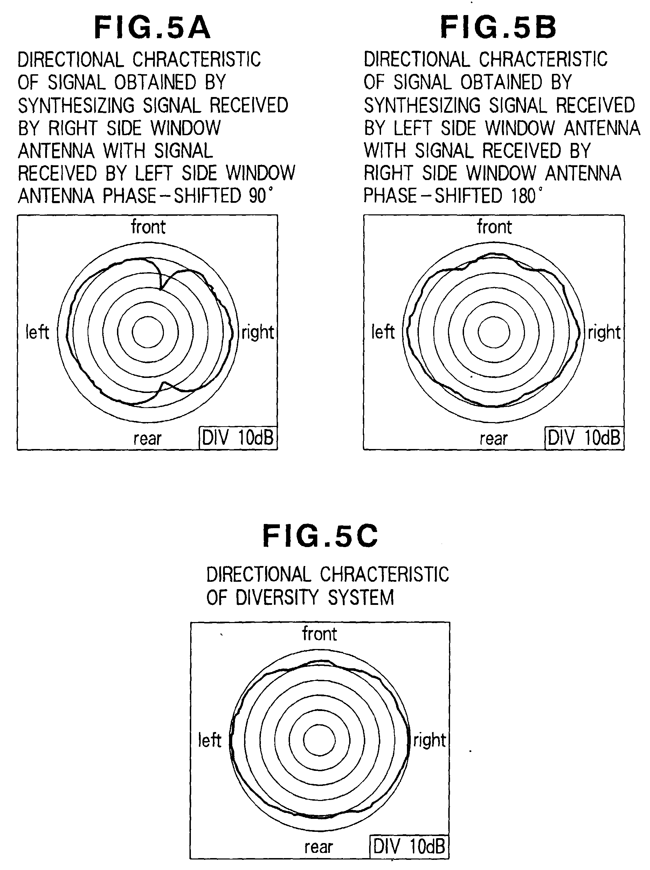

By phase-shifting 90° the signal received by the left side window antenna, synthesized directional characteristic as shown in FIG. 5A is provided. Similarly, by phase-shifting 180° the signal received by the right side window antenna, synthesized directional characteristic as shown in FIG. 5B is provided. The directional characteristic of the TV diversity system is as illustrated in FIG. 5C. As can be readily appreciated from FIG. 5C, the directional characteristic of the TV diversity system exhibits superiority in reception sensitivity over the directional characteristics of FIGS. 5A and 5B.

Comparison between the average reception sensitivities taken in all directions of the original antennas (see FIGS. 4A and 4B) and the TV diversity system (see FIG. 5C) revealed that the original antennas have an average reception sensitivity of -7.8 dB while the diversity system has an average reception sensitivity of -1.3 dB. Thus, the TV diversity system according to the present invention is improved 6.5 dB in average reception sensitivity. From the comparison between the directional characteristics of the original antennas and the TV diversity system, it may also be appreciated that the diversity system exhibits excellent non-directional characteristics.

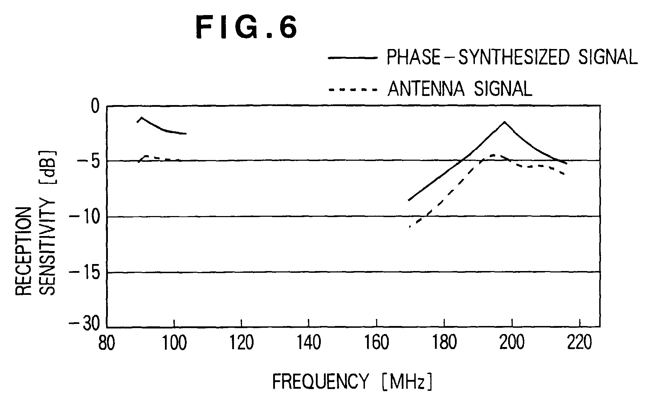

Referring next to FIG. 6, discussion will be made as to the sensitivity characteristics of the signal phase-synthesized in accordance with the present invention (i.e., the phased-array antenna signal) and the signal as received by the antennas. In FIG. 6, the phase-synthesized signal and the signal as received by the antennas are compared in the reception frequency of 80 to 220 MHz (VHF band). The reception sensitivities are given by way of frequency characteristics taken in a frequency range of 90 to 108 MHz (VHF (LOW) band) and a frequency range of 170 to 220 MHz (VHF (HIGH) band). The phase-synthesized signal (solid-lined) is improved 2 to 3 dB in reception sensitivity compared to the original signal as received by the antennas.

As is apparent from FIG. 6, the reception sensitivity of the received signal can be significantly increased by the phase synthesization as thus far explained. As a result, The TV diversity system can produce with only two antennas the results as achieved by four or more antennas.

FIG. 7 is a block diagram of a further preferred alternative of the vehicle-mounted TV diversity system according to the invention. In FIG. 7 these parts which are like or corresponding to those in the embodiment shown in FIG. 1 are designated by the same reference characters.

As shown in FIG. 7, the vehicle-mounted TV diversity system 1c has two TV antennas 2A and 2B, an amplifying means or amplifier 3, a phased-array antenna signal generating means or generator 4c, a selecting means or selector 5, and a receiving means or unit 6.

The TV antennas 2A, 2B are for example affixed to the rear window or side windows of the vehicle, and are formed as antenna elements by conductor patterns on the window.

The TV antenna 2A and the TV antenna 2B are disposed in opposing directions of the vehicle, for example in the left and right directions of the vehicle, and the TV antennas 2A, 2B each have directional characteristics as single antennas such that they can receive signals of high sensitivity to TV waves in respective opposing directions of the vehicle (for example the left direction and the right direction).

The TV antennas 2A, 2B receive TV waves and supply received signals S1, S2 to the amplifying means 3.

The amplifying means 3 is made up of amplifying circuits 3A, 3B having an impedance matching function; they suppress loss of the received signals S1, S2 supplied from the TV antennas 2A, 2B and amplify them at a required amplification factor before respectively supplying them as a low output impedance received signal S3 to the phased-array antenna signal generator 4c and a switch sw1 of the selector 5 and a received signal S4 to the phased-array antenna signal generator 4c and a switch sw4 of the selector 5.

The phased-array antenna signal generator 4c is comprised of a phase-synthesizer which is made up of same phase phase-synthesizer 40A and opposite phase phase-synthesizer 4B each composed of a phase-shifter having a fixed phase shift amount and a synthesizer used in one pair.

The same phase phase-synthesizer 40A synthesizes the received signal S3 supplied from the amplifying circuit 3A and the received signal S4 supplied from the amplifying circuit 3B after setting their phases to the same phase, and supplies a same phase phase-synthesized signal S6 to a switch sw2 of the selector 5.

The opposite phase phase-synthesizer 40B synthesizes the received signal S3 supplied from the amplifying circuit 3A and the received signal S4 supplied from the amplifying circuit 3B after setting their phases to the opposite phase, and supplies an opposite phase phase-synthesized signal S8 to a switch sw3 of the selector 5.

Because the phase-synthesizer (phased-array antenna signal generator) 4c has the same phase phase-synthesizer 40A and the opposite phase phase-synthesizer 40B like this, four received signals can be produced: that is, the received signals S3, S4 maintaining the original directional characteristics as received by the TV antennas 2A and 2B, and the same phase phase-synthesized signal S6 and the opposite phase phase-synthesized signal S8 generated by the phase-synthesizer 4c by phase-synthesizing the received signals S3 and S4 at the same phase and the opposite phase.

Therefore, since four received signals S3, S4, S6, S8 can be produced using two TV antennas 2A, 2B, the system is equivalent to one in which four TV antennas are provided individually.

The phased-array antenna signal generator (phase-synthesizer) 4c may be constructed to generate phase-synthesized signals S6 and S8 having directional characteristics orthogonal to the directional characteristics of the two received signals S3 and S4 received by the TV antennas 2A, 2B.

In this case, because there are provided two TV antennas having directional characteristics in opposing directions of the vehicle and phase-synthesizer generating phase-synthesized signals having directional characteristics orthogonal to the directional characteristics of the two signals received by the antennas, TV waves can be received with high sensitivity irrespective of the position and the orientation of the vehicle.

The selector 5 is made up of electronic switches sw1 through sw4, and on the basis of a selection control signal S9 supplied from the receiving means 6 sets any one of the switches sw1 through sw4 from a break state to a make state to select a corresponding signal from among the received signal S3, the same phase phase-synthesized signal S6, the opposite phase phase-synthesized signal S8 and the received signal S4, and supplies this selected signal to the receiving means 6 as a received signal S10.

The selection control signal S9 is for example made up of four bits of binary code, and has bit patterns set so that for example "0101" makes sw1, "0111" makes sw2, "1010" makes sw3 and "1110" makes sw4.

The reason for constituting the selection control signal S9 with four bits is to prevent malfunctioning in cases where there is a risk of the bit pattern becoming all "0" or all "1" due to an environment where the TV wave field is strong or due to external noise.

The selection control signal S9 repeats the four patterns in order with a fixed period and thereby sequentially makes the switches sw1 through sw4, and when a highest level of the received signal S10 is detected the selection control signal S9 specifies and holds in a make state the switch among the switches sw1 through sw4 which selected the signal among the received signal S3, the same phase phase-synthesized signal S6, the opposite phase phase-synthesized signal S8 and the received signal S4 which corresponds to this received signal S10.

The period at which one of the switches sw1 through sw4 is specified and held in a make state is set to be amply longer than the fixed period at which the selection control signal S9 repeats its four patterns.

The receiving means 6 is made up of a level-comparing means 7, a selection control means or controller 8, and a TV tuner 9.

The level-comparing means 7 is made up of rewritable memory such as RAM and level comparators and so on; it stores in memory received signals S10 consisting of the received signal S3, the same phase phase-synthesized signal S6, the opposite phase phase-synthesized signal S8 and the received signal S4 sequentially selected by the selector 5, executes a comparison of the levels of these sighals stored in memory, and supplies to the selection controller 8 a comparison signal S11 corresponding to the signal among the received signal S3, the same phase phase-synthesized signal S6, the opposite phase phase-synthesized signal S8 and the received signal S4 which has the highest level.

The selection controller 8 provides the selector 5 with the four-bit binary selection control signal S9 described above ("0101", "0111", "1010", "1110") on the basis of the comparison signal H11 supplied from the level-comparing means 7, and thereby executes control specifying the switch among the switches sw1 through sw4 which selects whichever of the received signal S3, the same phase phase-synthesized signal S6, the opposite phase phase-synthesized signal S8 and the received signal S4 has the highest level.

During periods when no comparison signal S11 is supplied to it, the selection controller 8 sweeps the binary code ("0101", "0111", "1010", "1110") with a fixed period and without specifying any one of the switches sw1 through sw4 thereby controls make operations of the switches sw1 through sw4 so that the received signal S3, the same phase phase-synthesized signal S6, the opposite phase phase-synthesized signal S8 and the received signal S4 are sequentially read in to the memory of the level-comparing means 7.

The TV tuner 9 together with video/audio circuits, and a display and so on a TV receiving means (TV set). By the TV tuner 9, the TV set turns the highest-level received signal S10 (either the received signal S3, the same phase phase-synthesized signal S6, the opposite phase phase-synthesized signal S8 or the received signal S4), selected by whichever of the switches sw1 through sw4 has been specified by the selecting means 5. Then, the TV set carries out amplification and so on of a video signal and an audio signal, displays a video picture on a screen, and outputs sound from an electro-acoustic convertor such as a loudspeaker.

As described above, because the vehicle-mounted TV diversity system 1 of this preferred embodiment has two TV antennas 2A, 2B and phase-synthesizing means 4 and can generate four received signals S10 (the received signal S3, the same phase phase-synthesized signal S6, the opposite phase phase-synthesized signal S8 and the received signal S4) and with selecting means 5 select whichever of the four received signals S10 has the highest level, it is possible to realize a system equivalent to a diversity system having four TV antennas.

Next, a simulation analysis of directional characteristics of sensitivity obtained on application of the vehicle-mounted TV diversity system 1 shown in FIG. 7 will be described.

For the vehicle type used in this simulation a minivan was employed, and for the TV antennas a model wherein strip antennas of element length 850 mm on side windows are supplied with power centrally in the height direction of the window at the window frame rear side was employed.

The main parameters of the simulation model are shown below.

| | |
|---|---|
| vehicle length | 4380 mm |
| vehicle width | 1660 mm |
| vehicle height | 1910 mm |
| antenna installation window (side window) sizes | 1400 mm (L) x 500 mm (H) |
| analysis frequency | 110 MHz |
| antenna spacing (spacing of left and right side windows) | 1530 mm (0.56λ at 110 MHz) |

As conditions of the simulation analysis the two strip antennas respectively had left and right directional characteristics, the phase-synthesis was made same phase and opposite phase, and the TV broadcast waves (TV waves) were made H-polarized waves or V-polarized waves; for sensitivity to H-polarized waves and for sensitivity to V-polarized waves in each case, evaluations were made of the directional characteristics of sensitivity of the two antennas, the directional characteristics of sensitivity obtained with same phase and opposite phase phase-synthesis, and the directional characteristics of sensitivity obtained with diversity.

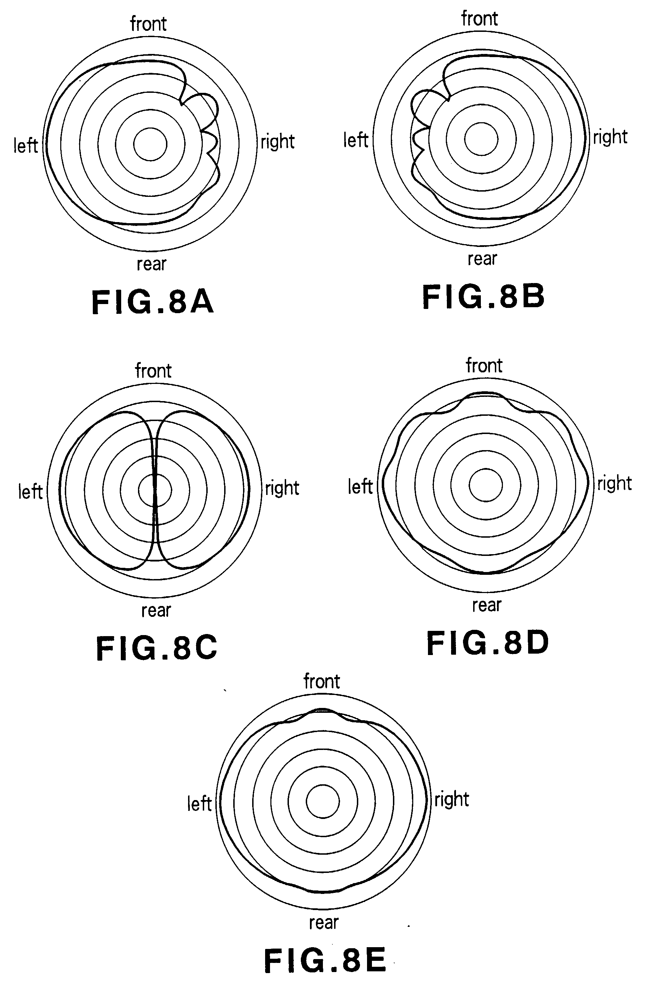

FIGS. 8A through 8E are charts of directional characteristic of sensitivity with respect to H-polarized waves obtained by the simulation.

Here, FIG. 8A shows the directional characteristic of sensitivity of the strip antenna having a directional characteristic in the left direction, FIG. 8B shows the directional characteristic of sensitivity of the strip antenna having a directional characteristic in the right direction, FIG. 8C shows the directional characteristic of sensitivity obtained with same phase phase-synthesis, FIG. 8D shows the directional characteristic of sensitivity obtained with opposite phase phase-synthesis, and FIG. 8E shows the directional characteristic of sensitivity obtained with diversity from the charts of FIGS. 8A through 8D.

In these figures, in the left-right direction, due to the strip antennas respectively having directional characteristics in the left and right directions, as shown in FIGS. 8A and 8B, sensitivity is high.

With same phase phase-synthesis sensitivity is relatively low in the front-rear direction, as shown in FIG. 8C, but opposite phase phase-synthesis produces high sensitivity in the front-rear direction, as shown in FIG. 8D.

With diversity, as shown in FIG. 8E, sensitivity is high in both the front-rear direction and the left-right direction, and it is possible to obtain a satisfactory directional characteristic of sensitivity with respect to H-polarized waves of a TV broadcast.

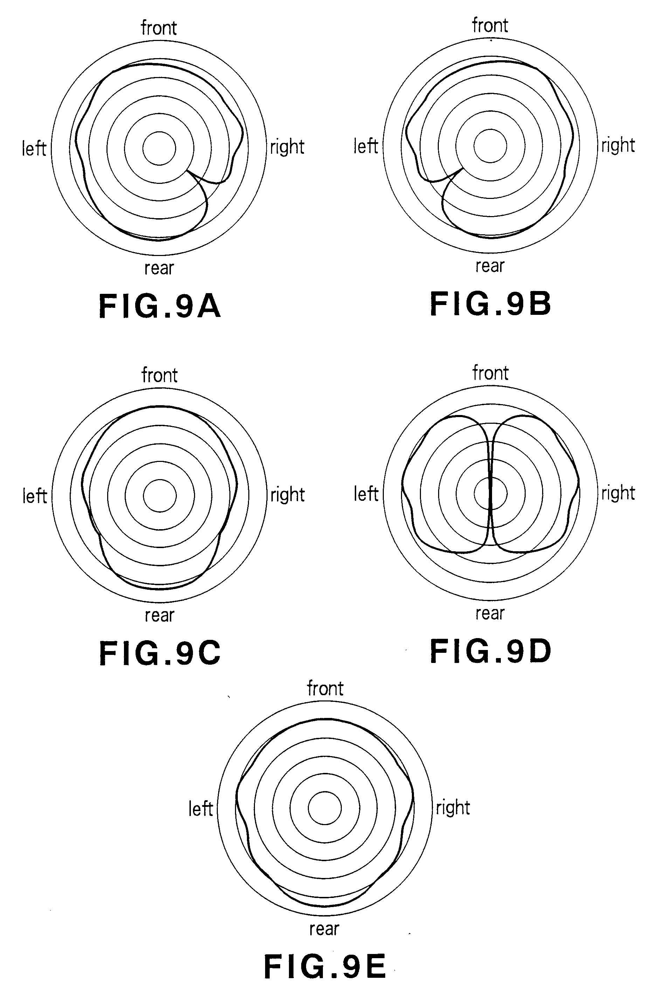

FIGS. 9A through 9E are charts of directional characteristic of sensitivity with respect to V-polarized waves obtained by simulation.

Here, FIG. 9A shows the directional characteristic of sensitivity of the strip antenna having a directional characteristic in the left direction, FIG. 9B shows the directional characteristic of sensitivity of the strip antenna having a directional characteristic in the right direction, FIG. 9C shows the directional characteristic of sensitivity obtained with same phase phase-synthesis, FIG. 9D shows the directional characteristic of sensitivity obtained with opposite phase phase-synthesis, and FIG. 9E shows the directional characteristic of sensitivity obtained with diversity from the charts of FIGS. 9A through 9D.

In these figures, that which differs from FIGS. 8A through 8D is the point that the front-rear direction sensitivity of FIG. 9C obtained with same phase phase-synthesis is high and the front-rear direction sensitivity of FIG. 9D obtained with opposite phase phase-synthesis is low.

With diversity, as shown in FIG. 9E, sensitivity is high in both the front-rear direction and the left-right direction, and it is possible to obtain a satisfactory directional characteristic of sensitivity with respect to V-polarized waves of a TV broadcast.

Thus, according to this simulation analysis, with respect to H-polarized TV broadcast waves it is possible to obtain a satisfactory directional characteristic of sensitivity in all directions with diversity of the left-right direction sensitivity of two strip antennas having directional characteristics to the left and right and the front-rear direction sensitivity of opposite phase phase-synthesis.

And, according to the simulation analysis, with respect to V-polarized TV broadcast waves it is possible to obtain a satisfactory directional characteristic of sensitivity in all directions with diversity of the left-right direction sensitivity of two strip antennas having directional characteristics to the left and right and the front-rear direction sensitivity of same phase phase-synthesis.

From the simulation analysis it is clear that with respect to H-polarized waves same phase phase-synthesis is not necessary for diversity and with respect to V-polarized waves opposite phase phase-synthesis is not necessary for diversity.

However, although domestic TV broadcasts are generally transmitted in H-polarized waves, due to various influences such as scattering of TV broadcast waves it is difficult to specify how TV broadcast waves actually received by a traveling vehicle are polarized, and therefore to obtain good sensitivity over all orientations of the vehicle with respect to H-polarized waves and V-polarized waves it is preferable to build diversity with the outputs of two antennas and both same phase phase-synthesis and opposite phase phase-synthesis.

Next, measured data of directional characteristics of sensitivity obtained for a vehicle-mounted TV diversity system 1 according to the invention mounted in a minivan and in a station wagon (also called estate wagon) vehicle and receiving TV broadcast waves (H-polarized waves) will be shown.

The conditions of the sensitivity measurement were as follows.

| | | |
|---|---|---|
| vehicle type | [1] minivan, [2] station wagon | |
| antenna installation position | left and right side windows | |
| distance between left and right antennas | [1] minivan | 1800 mm |
| | [2] station wagon | 1000 mm |
| measurement frequency | [1] minivan | 103 MHz, 199 MHz |
| | [2] station wagon | 102 MHz, 200 MHz |
| plane of polarization | H-polarization | |

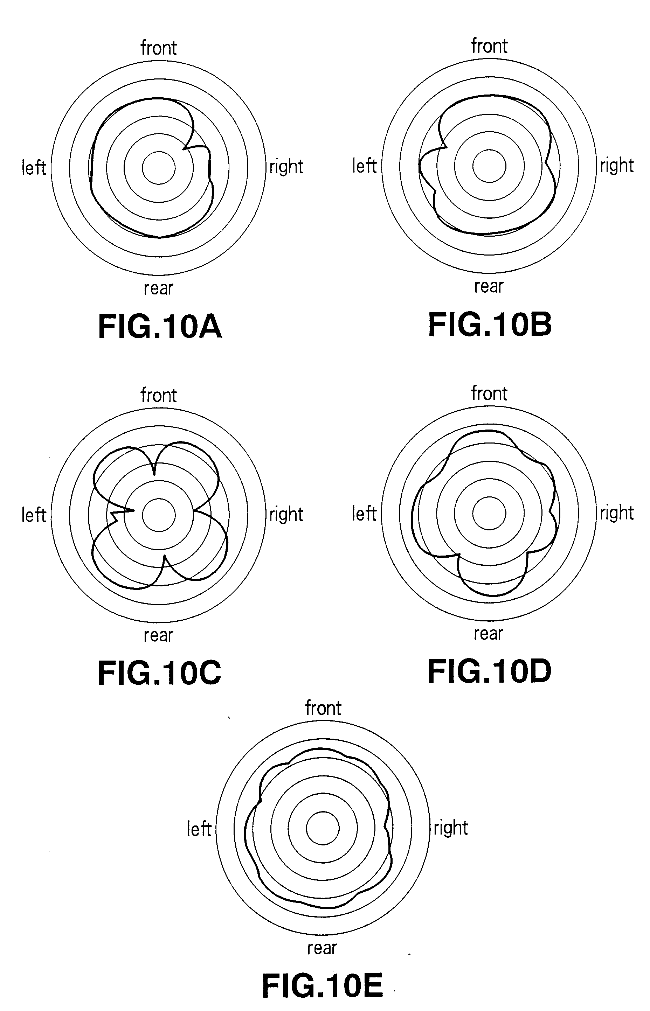

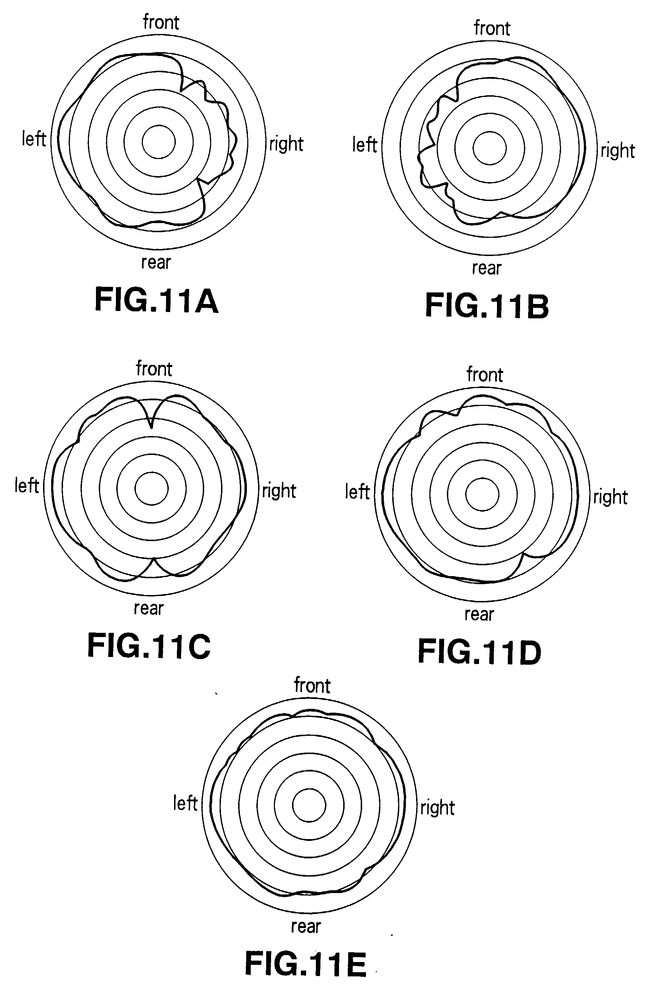

FIGS. 10A through 10E are charts of directional characteristic of sensitivity obtained with the minivan at the measurement frequency 103 MHz, and FIGS. 11A through 11E are charts of directional characteristic of sensitivity obtained with the minivan at the measurement frequency 199 MHz.

Here, FIGS. 10A and 11A show the directional characteristics of sensitivity of the strip antenna having a directional characteristic in the left direction, FIGS. 11B and 11B show the directional characteristics of sensitivity of the strip antenna having a directional characteristic in the right direction, FIGS. 10C and 11C show the directional characteristics of sensitivity obtained with same phase phase-synthesis, FIGS. 10D and 11D show the directional characteristics of sensitivity obtained with opposite phase phase-synthesis, and FIGS. 10E and 11E show the directional characteristics of sensitivity obtained with diversity from the respective other charts.

From the measured data of FIGS. 10A through 11E it can be seen that good results can be obtained over all orientations in a directional characteristic of sensitivity obtained from diversity of two left and right antennas with same phase phase-synthesis and opposite phase phase-synthesis.

In the directional characteristics of sensitivity of diversity shown in FIGS. 10E and 11E, sensitivity equal to or greater than the sensitivity of the left and right antennas at the measurement frequency is obtained over all orientations.

Also, the trends of the directional characteristic of sensitivity of diversity can be confirmed in the VHF frequency band (90 to 230 MHz).

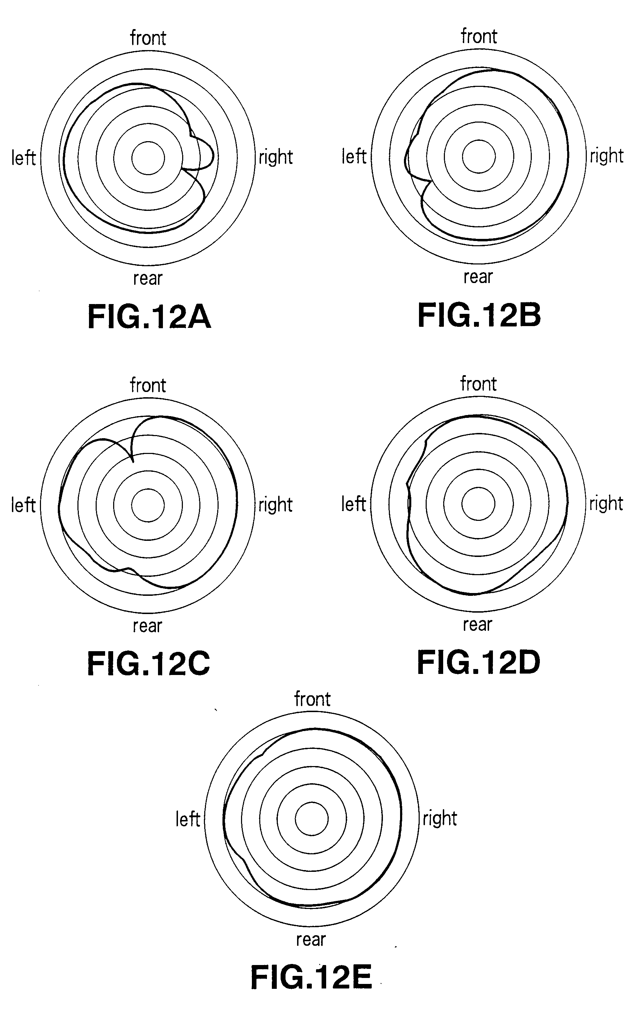

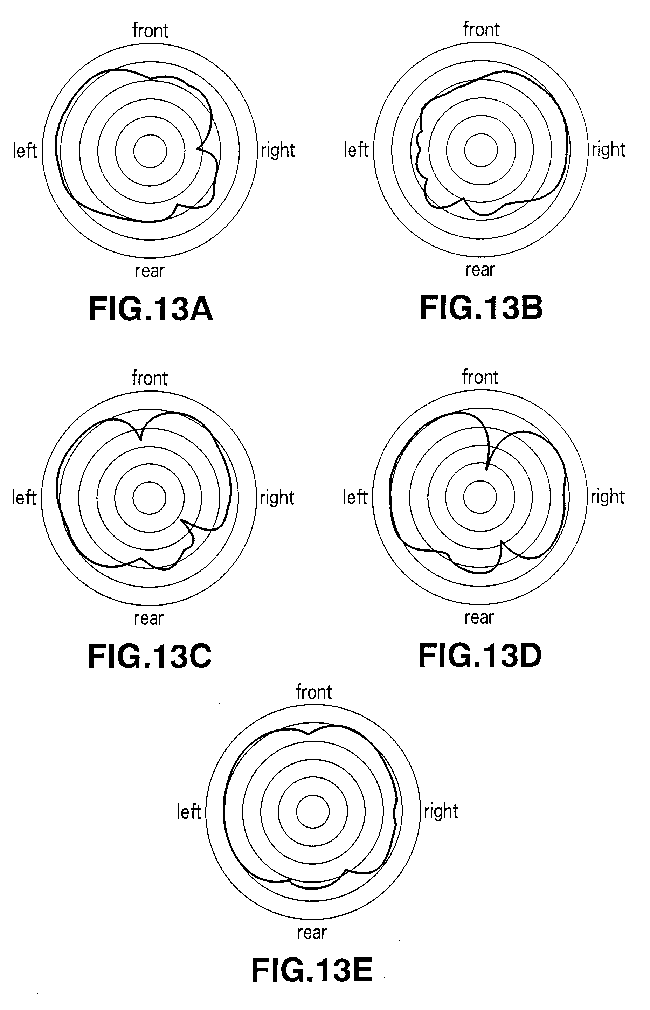

FIGS. 12A through 12E are charts of directional characteristic of sensitivity obtained with the station wagon at the measurement frequency 102 MHz, and FIGS. 13A through 13E are charts of directional characteristic of sensitivity obtained with the station wagon at the measurement frequency 200 MHz.

Here, FIGS. 12A and 13A show the directional characteristics of sensitivity of the strip antenna having a directional characteristic in the left direction, FIGS. 12B and 13B show the directional characteristics of sensitivity of the strip antenna having a directional characteristic in the right direction, FIGS. 12C and 13C show the directional characteristics of sensitivity obtained with same phase phase-synthesis, FIGS. 12D and 13D show the directional characteristics of sensitivity obtained with opposite phase phase-synthesis, and FIGS. 12E and 13E show the directional characteristics of sensitivity obtained with diversity from the respective other charts.

From the measured data of FIGS. 12A through 13E it can be seen that good results can be obtained over all orientations in a directional characteristic of sensitivity obtained from diversity of two left and right antennas with same phase phase-synthesis and opposite phase phase-synthesis.

In the directional characteristics of sensitivity of diversity shown in the FIGS. 12E and 13E, sensitivity equal to or greater than the sensitivity of the left and right antennas at the measurement frequency is obtained over all orientations.

Also, the trends of the directional characteristic of sensitivity of diversity can be confirmed in the VHF frequency band (90 to 230 MHz).

Thus, the actual measured data also, like the data from the simulation, shows that with diversity from two received signals from two antennas together with signals obtained by phase-synthesizing the two received signals at the same phase and at the opposite phase it is possible to obtain a directional characteristic of sensitivity equal to or better than that of diversity derived from four received signals from four antennas.

In this preferred embodiment diversity was provided using four received signals including both a same phase phase-synthesized signal and an opposite phase phase-synthesized signal; however, depending on the state of the TV waves to be received, the same phase phase-synthesized signal or the opposite phase phase-synthesized signal may be dispensed with in the provision of the diversity.

As described above in detail, with a vehicle-mounted TV diversity system according to the forgoing embodiment it is possible to provide diversity by producing four received signals from two TV antennas and obtain good sensitivity over all orientations, and as a result it is possible to realize a system whose construction is simple and economic which has a superior directional characteristic of sensitivity.

Also, because the phase-synthesized signals can each be generated by phase-synthesis at a fixed phase such as the same phase or the opposite phase, the vehicle TV diversity system can be realized easily.

And furthermore it is possible to realize a vehicle-mounted TV diversity system having a directional characteristic of sensitivity equal to or greater than that of a diversity system having four antennas.

Although in the illustrated embodiments the vehicle-mounted TV diversity systems have been disclosed and described as typical preferred examples of the vehicle-mounted VHF diversity system of the present invention, the present invention may be embodied in a vehicle-mounted FM diversity system. In the latter case, the TV antennas are replaced with FM antennas.

A vehicle-mounted VHF diversity system includes two VHF antennas (2A, 2B) and a phased-array antenna signal generating section (4) for generating from signals (S3, S4) received by the two VHF antennas at least one phased-array antenna signal (S6, S8) having different characteristics of directivity from the antenna signals. A selector (5) selects, from among the signals and the phased-array antenna signal, one signal for feeding to a VHF tuner (9). A selection controller (8) controls the selector to select the signal having the highest level. With this arrangement, the vehicle-mounted VHF diversity system can produce with only two antennas the result as achieved by three or more antennas. With only two antennas being necessary, a small area is required for disposition or arrangement of the antennas, thereby increasing the freedom of antenna designing and enabling the selection of antenna disposition areas which are free from antenna interferences.

## Claims

1. A vehicle-mounted VHF diversity system comprising:
two VHF antennas (2A, 2B) disposed on a vehicle in spaced relation to each other;
phased-array antenna signal generating means (4; 4a; 4b; 4c) for generating from signals (S3, S4) received by said two VHF antennas (2A, 2B) at least one phased-array antenna signal (S6, S8, S13, S15) having different characteristics of directivity from the signals (S3, S4) received by said two VHF antennas (2A, 2B);
selecting means (5) for selecting, from among the signals (S3, S4) received by said two VHF antennas and the at least one phased-array antenna signal (S6, S8, S13, S15) generated by said phased-array antenna signal generating means (4, 4a, 4b, 4c), one signal for feeding to a VHF tuner (9); and
selection control means (8) for controlling the selecting means (5) to select the signal having the highest level.

2. The vehicle-mounted VHF diversity system of claim 1, wherein said phased-array antenna signal generating means (4, 4a, 4b, 4c) is a phase-synthesizing means including at least one phase shifter (31-34) for shifting in a predetermined phase shift amount the phase of the signal received by either of the two VHF antennas (2A, 2B), and a synthesizer (41-44) for synthesizing a signal outputted from said phase shifter (31-34) with the signal received by the other one of said VHF antennas (2A, 2B).

3. The vehicle-mounted VHF diversity system of claim 1, wherein said phased-array antenna signal generating means (4, 4a, 4b, 4c) is a phase-synthesizing means including a plurality of phase shifters (31-34) for shifting in different phase shift amounts the phase of the signal received by either of the two VHF antennas (2A, 2B), and a plurality of synthesizers (41-44) for synthesizing signals outputted from said phase shifters (31-34) with the signal received by the other one of said VHF antennas (2A, 2B).

4. The vehicle-mounted VHF diversity system of claim 2, wherein said phase-synthesizing means (4c) phase-synthesizes at a fixed phase the signals received by said two VHF antennas (2A, 2B).

5. The vehicle-mounted VHF diversity system of claim 4, wherein said phase-synthesizing means (4c) phase-synthesizes the received signals at the same phase.

6. The vehicle-mounted VHF diversity system of claim 4, wherein said phase-synthesizing means (4c) phase-synthesizes the received signals at the opposite phase.

7. The vehicle-mounted VHF diversity system of claim 4, wherein said phase-synthesizing means (4c) has two said phase shifters and two said synthesizers and phase-synthesizes the received signals at both of the same phase and the opposite phase.

8. The vehicle-mounted VHF diversity system of claim 1, wherein said two VHF antennas (2A, 2B) receive two signals having directional characteristics in opposing directions of the vehicle and said phased-array antenna signal generating means (4, 4a, 4b, 4c) generates at least one phased-array antenna signal having a directional characteristic orthogonal to the directional characteristics of the two received signals.

9. The vehicle-mounted VHF diversity system of claim 1, further including two amplifying means (3A, 3B) disposed immediately following said VHF antennas (2A, 2B) for performing impedance matching on and amplifying the signals (S1, S2) received by said VHF antennas (2A, 2B).

10. The vehicle-mounted VHF diversity system of claim 1, further comprising an additional signal selecting means (5A) arranged in parallel to said signal selecting means (5) and operable under the control of said selection control means (8) for allowing connection to an additional VHF tuner (91).
